# EUROPEAN PATENT SPECIFICATION

(11) **EP 4 046 588 B1**
(45) Date of publication and mention of the grant of the patent: **19.06.2024**
(21) Application number: 21158621.9
(22) Date of filing: 23.02.2021
(51) Int. Cl.: A61C 7/14

(54) **ORTHODONTIC HEIGHT POSITIONING GAUGE**
KIEFERORTHOPÄDISCHE HÖHENPOSITIONIERUNGSLEHRE
JAUGE DE POSITIONNEMENT DE HAUTEUR ORTHODONTIQUE

(43) Date of publication of application: 24.08.2022
(73) Proprietor: LYS Office, 1140 Bruxelles (BE)
(72) Inventor: SEYAM, Jacem, 1140 Bruxelles (BE)
(74) Representative: Gevers Patents

(56) References cited:
- US-A1- 2004 005 523
- US-B1- 6 296 482

## Description

### Field of the invention

The present invention relates to an orthodontic height positioning gauge, i.e., a device for the placement of orthodontic brackets on teeth.

### Background of the invention

Most orthodontic height positioning gauges are difficult to fit into a patient's mouth because the cheek prevents the instrument from being positioned properly at the proper angle with the tooth to which the bracket is to be affixed.

Document US6296482B1 describes an orthodontic height positioning gauge with a rotatable head in order to facilitate the positioning of the gauge head in spite of the cheek. This known height positioning gauge appears to be cumbersome to use because the rotatable head has to be adjusted for each use. A similar type of height positioning gauge is known from US 2004/005523 A1.

### Summary of the invention

An object of the invention is to provide an orthodontic height positioning gauge facilitating the positioning of the gauge head in spite of the cheek and easy to use.

The invention is as defined in the independent claim and provides an orthodontic height positioning gauge comprising:
- a handle extending along a first direction,
- a head fixed at a first end of the handle,
- a central tab extending from the head in the first direction,
- a first bracket tab configured to place a bracket, extending from the head in the first direction and shifted from the central tab in a second direction perpendicular to the first direction,
the orthodontic height positioning gauge further comprises a first lateral tab fixed to the head, extending further than the first bracket tab in a third direction perpendicular to the first direction and to the second direction, and shifted from the first bracket tab in the second direction.

With the invention, the same head can be used in two ways. To place a bracket on a front tooth, the bracket is located by the first bracket tab and the central tab is placed along the occlusal surface of the tooth. The shift in the second direction between the first bracket tab and the central tab provides the distance in order to place the bracket on the tooth. To place a bracket on a posterior tooth, the bracket is located by the first bracket tab and the first lateral tab is placed along the occlusal surface of the tooth. The shift in the second direction between the first bracket tab and the first lateral tab provides the distance in order to place the bracket on the tooth. Since this shift is the second direction, and since the first lateral tab extends in the third direction, with the second and the third directions perpendicular to the direction of the handle, the handle easily can be placed between the cheek and the teeth during the placement of a bracket on a posterior tooth.

According to an embodiment of the invention, the first lateral tab is fixed to the head through the central tab.

According to an embodiment of the invention, the first lateral tab and the central tab are parallel.

According to the invention, the first lateral tab and the central tab are in the same plane. Therefore, the shift with respect to the first bracket tab, along the second direction, is the same for the first lateral tab and for the central tab. Both correspond to teeth that require the same distance between the chewing surface and the bracket.

According to an embodiment of the invention, the gauge comprises a second bracket tab configured to place a bracket, extending from the head in the first direction and shifted from the central tab in the second direction opposite to the first bracket tab, the shift between the second bracket tab and the central tab being smaller than the shift between the first bracket tab and the central tab. The shift to use depends on the type and the location of the tooth. With a second bracket tab having a smaller shift, the same head can used for teeth with different dimensions.

According to an embodiment of the invention, the gauge comprises a second lateral tab fixed to the head, and extending in the third direction opposite to the first lateral tab and further than the first bracket tab. The second lateral tab can be used for the other side of the mouth, and for the lower jaw if the first lateral tab is used for the upper jaw. The first and the second lateral tabs are in the same plane. The second lateral tab is preferably a mirror image of the first lateral tab.

According to the invention, the handle, the head, the first bracket tab and the first lateral tab are fixed in an unmovable way. All these elements are attached in such a way that they are not expected to move with respect to each other.

According to the invention, the gauge is one piece.

According to an embodiment of the invention, the gauge is made of polymeric material aluminum and/or stainless steel.

According to an embodiment of the invention, the central tab extends further away from the head than the first bracket tab along the first direction.

According to an embodiment of the invention, the head is wider along the second direction than along the third direction.

According to an embodiment of the invention, the gauge comprises a first reinforcing wall between the central tab and the first bracket tab. The first reinforcing wall fills part of the gap between the central tab and the first bracket tab.

According to an embodiment of the invention, the gauge comprises:
- another head fixed at a second end of the handle, the second end being opposite, in the first direction, to the first end of the handle,
- another central tab extending from the other head in the first direction,
- another first bracket tab configured to place a bracket, extending from the other head in the first direction and shifted from the other central tab in the second direction,
- another first lateral tab fixed to the other head, extending further than other the first bracket tab in the third direction, and shifted from the other first bracket tab in the second direction,
wherein the shift between the first bracket tab and the central tab is different from the shift between the other first bracket tab and the other central tab. The other head can thus be used on other teeth than the first head.

The disclosure also encompasses a process (not claimed) for placing a bracket on a tooth with an orthodontic height positioning gauge according to any embodiment of the invention, comprising the following steps:
- placing the bracket on the first bracket tab,
- inserting the head between the tooth and the check,
- placing the first lateral tab along the occlusal surface of the tooth, and
- placing the bracket on the tooth.

The disclosure also encompasses a process (not claimed) for producing an orthodontic height positioning gauge according to any embodiment of the invention by three-dimensional printing.

### Brief description of the figures

For a better understanding of the present invention, reference will now be made, by way of example, to the accompanying drawings in which:
- Figure 1 is a side view of an end of a gauge according to an embodiment of the invention,
- Figure 2a is a front view of an end of a gauge according to an embodiment of the invention,
- Figure 2b is a top view of the end of the gauge shown at figure 2a,
- Figure 3a is a front view of an end of a gauge according to another embodiment of the invention or of another end of the gauge shown at figure 2a, and
- Figure 3b is a top view of the end of the gauge shown at figure 3a.

### Description of the invention

The present invention will be described with respect to particular embodiments and with reference to certain drawings but the invention is not limited thereto. The described functions are not limited by the described structures. The drawings described are only schematic and are nonlimiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

The "orthodontic height positioning gauge" may be referred to as the "gauge" within the present document.

In the frame of the present document, a "tab" is preferably a three-dimensional element with one dimension (its thickness) lower than the two other dimensions. A tab is preferably planar.

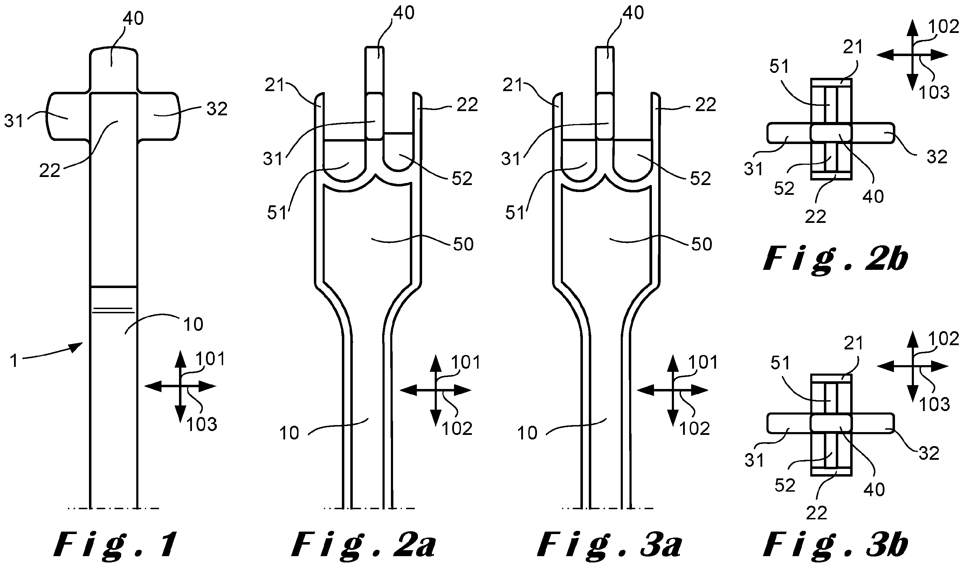

All figures illustrate an end of a possible orthodontic height positioning gauge 1 (or, simply gauge 1) according to the invention. The gauge 1 comprises a handle 10, which is preferably a rod. The handle 10 has a first end, and a second end opposed to the first end in a first direction 101. In a preferred embodiment of the invention, the gauge 1 comprises a head 50 fixed to the first end of the handle 10 (for example the head 50 illustrated at figures 2a and 2b), and another head 50 fixed to the second end of the handle 10 (for example the head 50 illustrated at figures 3a and 3b). The other head may be rotated, around an axis along the first direction 101, with respect to the head. In another embodiment, the gauge 1 has only one head 50.

Moreover, even if the description below refers to two bracket tabs and two lateral tabs, the invention is intended to cover the cases with one bracket tab and one lateral tab (as in claim 1 for example), with one bracket tab and two lateral tabs, with two bracket tabs and one lateral tab or with any other number of bracket and/or lateral and/or central tabs.

The gauge 1 comprises a central tab 40 extending from the head 50 in the first direction 101. The central tab 40 is configured to be partially inserted within a groove of the bracket in order to locate the bracket on a tooth.

The gauge 1 comprises a first bracket tab 21, and preferably a second bracket tab 22, extending from the head 50 in the first direction 101. Both are shifted from the central tab 40 in a second direction 102, perpendicular to the first direction 101. They are on opposite sides of the central tab 40. The first and second bracket tabs 21, 22 are configured to be partially inserted within the groove of the bracket in order to locate the bracket on a tooth.

The gauge 1 comprises a first lateral tab 31, and preferably a second lateral tab 32, extending from the head 50 in a third direction 103 perpendicular to the first 101 and the second 102 directions. The first lateral tab 31 and the second lateral tab 32 extends further than the first bracket tab 21 and the second bracket tab 22 in the third direction 103, opposite to each other. Preferably, the first lateral tab 31, the second lateral tab 32, and more preferably the central tab 40 are in a same plane, which is perpendicular to the second direction 102. The first lateral tab 31 and the second lateral tab 32 are preferably fixed to the head 50 by the central tab 40. The first lateral tab 31, the second lateral tab 32, the first bracket tab 21 and the second bracket tab 22 are at the same level along the first direction 101, and the central tab 40 is further than them along the first direction 101.

The first lateral tab 31, the second lateral tab 32, the central tab 40 and the handle 10 preferably form a cross in a plane perpendicular to the second direction 102.

The first lateral tab 31, the second lateral tab 32, the first bracket tab 21, the second bracket tab 22 and the central tab 40 have preferably their thickness along the second direction 102. They might be called, respectively, first, second, third, fourth and fifth tab.

The first lateral tab 31, the second lateral tab 32, the first bracket tab 21, the second bracket tab 22, the central tab 40, the head 50 and the handle 10 are preferably fixed in such a way that they cannot move with respect to each other. They are preferably made in one piece, for example by three-dimensional printing.

The distance, measured along the second direction 102, between the second bracket tab 22 and the plane of the first lateral tab 31 is lower (figure 2a) or higher (figure 2b) than the distance, measured along the second direction 102, between the first bracket tab 21 and the plane of the first lateral tab 31. In the preferred embodiment of the invention, the gauge 1 provides for four different distances between a bracket tab and a first lateral tab 31. For example, the distance between a bracket tab 21, 22 and the first lateral tab 31 can be:
- first end of the gauge 1 :
   ∘ 5 mm (left of figure 2a)
   ∘ 3,5 mm (right of figure 2a)
- second end of the gauge 1:
   ∘ 4 mm (left of figure 2b)
   ∘ 4,5 mm (right of figure 2b).

The gauge 1 preferably comprises a first reinforcing wall 51 between the central tab 40 and the first bracket tab 21 and a second reinforcing wall 52 between the central tab 40 and the second bracket tab 22. The first reinforcing wall 51 and the second reinforcing wall 52 are preferably in a plane perpendicular to the third direction 103.

When a bracket has to be placed on a front tooth, the bracket is placed on the side, along the first direction 101, of the first bracket tab 21 (or of the second bracket tab 22, depending on the distance required). Then, the central tab 40 is placed along the occlusal surface of the tooth. If the patient who receives the bracket stands vertically, the central tab 40 is thus horizontal, and the bracket tab 21, 22 also. The shift in the second direction 102 (which is thus vertical) between the bracket tab 21, 22 and the central tab 40 provides the distance, from the occlusal surface, in order to place the bracket on the tooth.

When a bracket has to be placed on a side tooth on the right of the upper jaw of a patient (right taken from the patient's point of view), the bracket is placed on the left side, along the third direction 103, of the first bracket tab 21 (or of the second bracket tab 22, depending on the distance required). It corresponds to the left side of the first bracket tab 21 on figures 2b or 3b. Then, the first lateral tab 31 is placed below the occlusal surface of the tooth. If the patient who receives the bracket stands vertically, the first lateral tab 31 is thus horizontal, and the bracket tab 21, 22 also. The shift in the second direction 102 (which is thus vertical) between the bracket tab 21, 22 and the first lateral tab 31 provides the distance, from the occlusal surface, in order to place the bracket on the tooth.

For the lower jaw on the right of the patient, with a distance corresponding to the first bracket tab 21, the second lateral tab 32 can be used, by rotating the gauge 1. On the left side, it is the opposite.

In other words, the invention relates to an orthodontic height positioning gauge 1 having bracket tabs 21, 22 to place a bracket, and lateral tabs 31, 32 configured to be placed along the occlusal surface of a lateral tooth. In such a position, the handle 10 extends between the lateral jaw and the cheek, and the bracket located by the bracket tabs 21, 22 can be placed on the buccal surface of the tooth without hindrance due to the cheek.

Although the present invention has been described above with respect to particular embodiments, it will readily be appreciated that other embodiments are also possible.

## Claims

1. Orthodontic height positioning gauge (1) comprising:
• a handle (10) extending along a first direction (101),
• a head (50) fixed at a first end of the handle (10),
• a central tab (40) extending from the head (50) in the first direction (101),
• a first bracket tab (21) configured to place a bracket, extending from the head (50) in the first direction (101) and shifted from the central tab (40) in a second direction (102) perpendicular to the first direction (101),
the orthodontic height positioning gauge (1) further comprises a first lateral tab (31) fixed to the head (50), extending further than the first bracket tab (21) in a third direction (103) perpendicular to the first direction (101) and to the second direction (102), and shifted from the first bracket tab (21) in the second direction (102), wherein
the first lateral tab (31) and the central tab (40) being in the same plane, **characterized in that**
the handle (10), the head (50), the first bracket tab (21) and the first lateral tab (31) being fixed in an unmovable way, and
the orthodontic height positioning gauge (1) being one piece.

2. Orthodontic height positioning gauge (1) according to claim 1, wherein the first lateral tab (31) is fixed to the head (50) through the central tab (40).

3. Orthodontic height positioning gauge (1) according to any of the preceding claims, wherein the first lateral tab (31) and the central tab (40) are parallel.

4. Orthodontic height positioning gauge (1) according to any of the preceding claims, further comprising a second bracket tab (22) configured to place a bracket, extending from the head (50) in the first direction (101) and shifted from the central tab (40) in the second direction (102) opposite to the first bracket tab (21), the shift between the second bracket tab (22) and the central tab (40) being smaller than the shift between the first bracket tab (21) and the central tab (40).

5. Orthodontic height positioning gauge (1) according to any of the preceding claims, further comprising a second lateral tab (32) fixed to the head (50), and extending in the third direction (103) opposite to the first lateral tab (31) and further than the first bracket tab (21).

6. Orthodontic height positioning gauge (1) according to any of the preceding claims, made of polymeric material aluminum and/or stainless steel.

7. Orthodontic height positioning gauge (1) according to any of the preceding claims, wherein the central tab (40) extends further away from the head (50) than the first bracket tab (21) along the first direction (101).

8. Orthodontic height positioning gauge (1) according to any of the preceding claims, wherein the head (50) is wider along the second direction (102) than along the third direction (103).

9. Orthodontic height positioning gauge (1) according to any of the preceding claims, further comprising a first reinforcing wall (51) between the central tab (40) and the first bracket tab (21).

10. Orthodontic height positioning gauge (1) according to any of the preceding claims, further comprising:
• another head (50) fixed at a second end of the handle (10), the second end being opposite, in the first direction (101), to the first end of the handle (10),
• another central tab (40) extending from the other head (50) in the first direction (101),
• another first bracket tab (21) configured to place a bracket, extending from the other head (50) in the first direction (101) and shifted from the other central tab (40) in the second direction (102),
• another first lateral tab (31) fixed to the other head (50), extending further than other the first bracket tab (21) in the third direction (103), and shifted from the other first bracket tab (21) in the second direction (102),
wherein the shift between the first bracket tab (31) and the central tab (40) is different from the shift between the other first bracket tab (21) and the other central tab (40).

## Patentansprüche

1. Kieferorthopädische Höhenpositionierungslehre (1), umfassend:
- einen Griff (10), der sich entlang einer ersten Richtung (101) erstreckt,
- einen Kopf (50), der an einem ersten Ende des Griffs (10) befestigt ist,
- eine mittlere Lasche (40), die sich vom Kopf (50) in die erste Richtung (101) erstreckt,
- eine erste Klammerlasche (21), die zum Platzieren einer Klammer konfiguriert ist, sich vom Kopf (50) in die erste Richtung (101) erstreckt und von der mittleren Lasche (40) in eine zweite Richtung (102) senkrecht zur ersten Richtung (101) verschoben ist,
wobei die kieferorthopädische Höhenpositionierungslehre (1) weiter eine erste seitliche Lasche (31) umfasst, die am Kopf (50) befestigt ist, sich weiter als die erste Klammerlasche (21) in eine dritte Richtung (103) senkrecht zur ersten Richtung (101) und zur zweiten Richtung (102) erstreckt und von der ersten Klammerlasche (21) in die zweite Richtung (102) verschoben ist,
wobei die erste seitliche Lasche (31) und die mittlere Lasche (40) in derselben Ebene liegen, **dadurch gekennzeichnet, dass**
der Griff (10), der Kopf (50), die erste Klammerlasche (21) und die erste seitliche Lasche (31) auf unbewegliche Weise befestigt sind, und
die kieferorthopädische Höhenpositionierungslehre (1) einstückig ist.

2. Kieferorthopädische Höhenpositionierungslehre (1) nach Anspruch 1, wobei die erste seitliche Lasche (31) durch die mittlere Lasche (40) am Kopf (50) befestigt ist.

3. Kieferorthopädische Höhenpositionierungslehre (1) nach einem der vorstehenden Ansprüche, wobei die erste seitliche Lasche (31) und die mittlere Lasche (40) parallel sind.

4. Kieferorthopädische Höhenpositionierungslehre (1) nach einem der vorstehenden Ansprüche, die weiter eine zweite Klammerlasche (22) umfasst, die zum Platzieren einer Klammer konfiguriert ist, sich vom Kopf (50) in die erste Richtung (101) erstreckt und von der mittleren Lasche (40) in die zweite Richtung (102) entgegengesetzt zur ersten Klammerlasche (21) verschoben ist, wobei die Verschiebung zwischen der zweiten Klammerlasche (22) und der mittleren Lasche (40) kleiner ist als die Verschiebung zwischen der ersten Klammerlasche (21) und der mittleren Lasche (40).

5. Kieferorthopädische Höhenpositionierungslehre (1) nach einem der vorstehenden Ansprüche, weiter umfassend eine zweite seitliche Lasche (32), die am Kopf (50) befestigt ist und sich in die dritte Richtung (103) entgegengesetzt zur ersten seitlichen Lasche (31) und weiter als die erste Klammerlasche (21) erstreckt.

6. Kieferorthopädische Höhenpositionierungslehre (1) nach einem der vorstehenden Ansprüche, hergestellt aus Polymermaterial Aluminium und/oder Edelstahl.

7. Kieferorthopädische Höhenpositionierungslehre (1) nach einem der vorstehenden Ansprüche, wobei sich die mittlere Lasche (40) entlang der ersten Richtung (101) weiter vom Kopf (50) weg erstreckt als die erste Klammerlasche (21).

8. Kieferorthopädische Höhenpositionierungslehre (1) nach einem der vorstehenden Ansprüche, wobei der Kopf (50) entlang der zweiten Richtung (102) breiter ist als entlang der dritten Richtung (103).

9. Kieferorthopädische Höhenpositionierungslehre (1) nach einem der vorstehenden Ansprüche, die weiter eine erste Verstärkungswand (51) zwischen der mittleren Lasche (40) und der ersten Klammerlasche (21) umfasst.

10. Kieferorthopädische Höhenpositionierungslehre (1) nach einem der vorstehenden Ansprüche, weiter umfassend:
- einen anderen Kopf (50), der an einem zweiten Ende des Griffs (10) befestigt ist, wobei das zweite Ende in der ersten Richtung (101) dem ersten Ende des Griffs (10) gegenüberliegt,
- eine andere mittlere Lasche (40), die sich vom anderen Kopf (50) in die erste Richtung (101) erstreckt,
- eine andere erste Klammerlasche (21), die zum Platzieren einer Klammer konfiguriert ist, sich vom anderen Kopf (50) in die erste Richtung (101) erstreckt und von der anderen mittleren Lasche (40) in die zweite Richtung (102) verschoben ist,
- eine andere erste seitliche Lasche (31), die am anderen Kopf (50) befestigt ist, sich weiter als die andere erste Klammerlasche (21) in die dritte Richtung (103) erstreckt und von der anderen ersten Klammerlasche (21) in die zweite Richtung (102) verschoben ist,
wobei sich die Verschiebung zwischen der ersten Klammerlasche (31) und der mittleren Lasche (40) von der Verschiebung zwischen der anderen ersten Klammerlasche (21) und der anderen mittleren Lasche (40) unterscheidet.

## Revendications

1. Jauge orthodontique de positionnement de hauteur (1) comprenant :
• une poignée (10) s'étendant le long d'une première direction (101),
• une tête (50) fixée à une première extrémité de la poignée (10),
• une patte centrale (40) s'étendant de la tête (50) dans la première direction (101),
• une première patte de support (21) configurée pour placer un support, s'étendant de la tête (50) dans la première direction (101) et décalée de la patte centrale (40) dans une seconde direction (102) perpendiculaire à la première direction (101),
la jauge orthodontique de positionnement de hauteur (1) comprend en outre une première patte latérale (31) fixée à la tête (50), s'étendant plus loin que la première patte de support (21) dans une troisième direction (103) perpendiculaire à la première direction (101) et à la deuxième direction (102), et décalée par rapport à la première patte de support (21) dans la deuxième direction (102),
dans lequel
la première patte latérale (31) et la patte centrale (40) étant dans le même plan, **caractérisé en ce que**
la poignée (10), la tête (50), la première patte de support (21) et la première patte latérale (31) étant fixées de manière inamovible, et
la jauge orthodontique de positionnement de hauteur (1) étant d'une seule pièce.

2. Jauge orthodontique de positionnement de hauteur (1) selon la revendication 1, dans laquelle la première patte latérale (31) est fixée à la tête (50) par l'intermédiaire de la patte centrale (40).

3. Jauge orthodontique de positionnement de hauteur (1) selon l'une quelconque des revendications précédentes, dans laquelle la première patte latérale (31) et la patte centrale (40) sont parallèles.

4. Jauge orthodontique de positionnement de hauteur (1) selon l'une quelconque des revendications précédentes, comprenant en outre une seconde patte de support (22) configurée pour placer un support, s'étendant de la tête (50) dans la première direction (101) et décalée de la patte centrale (40) dans la seconde direction (102) opposée à la première patte de support (21), le décalage entre la seconde patte de support (22) et la patte centrale (40) étant plus petit que le décalage entre la première patte de support (21) et la patte centrale (40).

5. Jauge orthodontique de positionnement de hauteur (1) selon l'une quelconque des revendications précédentes, comprenant en outre une deuxième patte latérale (32) fixée à la tête (50), et s'étendant dans la troisième direction (103) opposée à la première patte latérale (31) et plus loin que la première patte de support (21).

6. Jauge orthodontique de positionnement de hauteur (1) selon l'une quelconque des revendications précédentes, en matériau polymère aluminium et/ou acier inoxydable.

7. Jauge orthodontique de positionnement de hauteur (1) selon l'une quelconque des revendications précédentes, dans laquelle la patte centrale (40) s'étend plus loin de la tête (50) que la première patte de support (21) le long de la première direction (101).

8. Jauge orthodontique de positionnement de hauteur (1) selon l'une quelconque des revendications précédentes, dans laquelle la tête (50) est plus large le long de la deuxième direction (102) que le long de la troisième direction (103).

9. Jauge orthodontique de positionnement de hauteur (1) selon l'une quelconque des revendications précédentes, comprenant en outre une première paroi de renfort (51) entre la patte centrale (40) et la première patte de support (21).

10. Jauge orthodontique de positionnement de hauteur (1) selon l'une quelconque des revendications précédentes, comprenant en outre :
• une autre tête (50) fixée à une deuxième extrémité de la poignée (10), la deuxième extrémité étant opposée, dans la première direction (101), à la première extrémité de la poignée (10),
• une autre patte centrale (40) s'étendant à partir de l'autre tête (50) dans la première direction (101),
• une autre première patte de support (21) configurée pour placer un support, s'étendant à partir de l'autre tête (50) dans la première direction (101) et décalée à partir de l'autre patte centrale (40) dans la deuxième direction (102),
• une autre première patte latérale (31) fixée à l'autre tête (50), s'étendant plus loin que l'autre première patte de support (21) dans la troisième direction (103), et décalée par rapport à l'autre première patte de support (21) dans la deuxième direction (102),
dans laquelle le décalage entre la première patte de support (31) et la patte centrale (40) est différent du décalage entre l'autre première patte de support (21) et l'autre patte centrale (40).
